# EUROPÄISCHE PATENTSCHRIFT

(11) **EP 3 539 858 B1**
(45) Veröffentlichungstag und Bekanntmachung des Hinweises auf die Patenterteilung: **29.12.2021**
(21) Anmeldenummer: 19162146.5
(22) Anmeldetag: 12.03.2019
(51) Int. Cl.: B62M 9/136, B62K 25/28

(54) **FÜHRUNGSELEMENT FÜR FAHRRAD-ANTRIEBSMITTEL**
GUIDE ELEMENT FOR BICYCLE PROPULSION MEANS
ÉLÉMENT DE GUIDAGE POUR MOYEN D'ENTRAÎNEMENT DE BICYCLETTE

(30) Priorität: 15.03.2018 DE 202018001375 U
(43) Veröffentlichungstag der Anmeldung: 18.09.2019
(73) Patentinhaber: Canyon Bicycles GmbH, 56073 Koblenz (DE)
(72) Erfinder: Johannes, Thumm, 56076 Koblenz (DE)
(74) Vertreter: dompatent von Kreisler Selting Werner - Partnerschaft von Patent- und Rechtsanwälten mbB

(56) Entgegenhaltungen:
- CH-A- 222 941
- DE-A1- 2 041 296
- DE-U1- 29 904 311
- US-A1- 2017 274 962
- Jeroen -: "Scott Genius 2018: "One frame for all"", Velozine, 16 June 2017 (2017-06-16), XP055760881, Retrieved from the Internet: URL:https://www.velozine.nl/nieuws/scott-g enius-2018-one-frame-for-all/ [retrieved on 2020-12-17]
- - -: "Scott Genius 2018 Chain Guide 30-36Z", , 1 December 2020 (2020-12-01), XP055760895, Retrieved from the Internet: URL:https://www.sportokay.com/nl_en/scott- genius-2018-kettenfuehrung-30-36z.html?gcl id=CjwKCAiA_eb-BRB2EiwAGBnXXrOo_3UUmDUjr2J 6IYr8laR8_27_zcTNpruyAZgWzMseRE4VtPgJ9xoC- sgQAvD_BwE [retrieved on 2020-12-17]

## Beschreibung

Die Erfindung betrifft ein Führungselement für ein Fahrrad-Antriebsmittel.

Bei Fahrradantriebsmitteln handelt es sich üblicherweise um Ketten oder Riemen. Bei Ketten als Antriebsmittel ist es bekannt, im Bereich eines Antriebs- bzw. Kettenblattes eine Kettenführung vorzusehen. Diese dient dazu, ein Abwerfen der Kette im Bereich des Kettenblattes zu verhindern, bzw. das Risiko eines Abwerfens zu verringern. Insbesondere soll durch eine entsprechende Kettenführung ein Abwerfen der Kette nach innen vermieden werden, so dass ein Verklemmen der Kette zwischen einem Kettenblatt und einem Rahmenelement wie dem Tretlagergehäuse vermieden ist. Bei Einfach-Antrieben, das heißt Antrieben, die im Bereich des Tretlagers nur ein Antriebs- bzw. Kettenblatt aufweisen, ist es bekannt, eine entsprechende Kettenführung über Schellen am Fahrradrahmen insbesondere dem Sattelrohr des Fahrradrahmens zu fixieren. Des Weiteren sind Kettenführungen bekannt, die am Tretlagergehäuse fixiert sind. Hierbei handelt es sich jeweils um relativ aufwendige zusätzliche Bauteile mit Befestigungselementen. Dies ist mit erhöhten Kosten, zusätzlichem Gewicht sowie Montageaufwand verbunden.

Um ein Herunterrutschen der Kette vom Kettenblatt zu vermeiden ist von der Firma Scott unter der Bezeichnung Scott Genius 2018, auf der Internetseite https://www.velozine.nl/nieuws/scott-genius-2018-one-frame-for-all/ : "One frame for all" ein Führungsmittel entsprechend der Präambel des Anspruchs 1 bekannt, das im Bereich des Kettenblatts ein Halteelement aufweist, das mit dem Fahrradrahmen verbunden ist. Dieses weist einen im montierten Zustand vertikal verlaufenden Längsschlitz auf, an dem ein Ketten-Halteelement fixiert werden kann. Dieses umgreift die Kette auf einer Innenseite und einer Außenseite. Über einen Längsschlitzes ist eine Justage durch horizontales Verschieben des Ketten-Halteelements möglich.

Aufgabe der Erfindung ist es, ein Führungselement für Fahrrad-Antriebsmittel zu schaffen, das auf einfache Weise am Fahrrad angeordnet, insbesondere befestigt werden kann.

Die Lösung der Aufgabe erfolgt erfindungsgemäß durch ein Führungselement für Fahrrad-Antriebsmittel mit den Merkmalen des Anspruchs 1.

Das erfindungsgemäße Führungselement für Fahrrad-Antriebsmittel wie insbesondere Fahrradketten und Fahrradriemen weist einen Hauptlagerbolzen und eine Abstandshülse auf. Der Hauptlagerbolzen dient zur Fixierung eines Schwingenlagers einer Fahrrad-Hinterradschwinge. Fahrräder mit Hinterradschwingen, das heißt mit einem gefederten Hinterbau weisen ein Hauptlager auf. Über das Hauptlager ist die Hinterradschwinge bzw. der gefederte Hinterbau mit dem Fahrradrahmen schwenkbar verbunden. Eine weitere Verbindung des Hinterbaus erfolgt üblicherweise über eine Wippe, die einerseits mit dem Fahrradrahmen und andererseits mit einem Dämpfungselement verbunden ist.

Erfindungsgemäß ist die Abstandshülse an dem Hauptlagerbolzen angeordnet. Die Abstandshülse ist hierbei derart an dem Hauptlagerbolzen angeordnet, dass hierdurch eine Verringerung des Abstandes zwischen dem Antriebsblatt und einem Fahrradrahmenelement wie einem Rahmenrohr, einem Tretlager oder dergleichen verwirklicht ist. Durch eine derartige Verringerung dieses Abstandes ist ein Herunterrutschen oder Abwerfen des Antriebsmittels nach innen vermieden, da der Abstand zwischen dem Antriebsblatt und einem Fahrradrahmenelement durch die erfindungsgemäße Abstandshülse derart verringert wird, dass der verbleibende Abstand geringer als die Abmessungen des Antriebsmittels ist.

Eine derartige Anordnung der Abstandshülse an dem Hauptlagerelement ist insbesondere bei Ausführungsformen eines Fahrrads vorteilhaft bei dem das Hauptlager der Hinterradschwinge im Bereich des Antriebsblattes angeordnet ist. Sofern das Hauptlager in einem Abstand zum Antriebsblatt angeordnet ist, kann in einer bevorzugten Weiterbindung der Erfindung die Abstandshülse einen Ansatz aufweisen, der in montiertem Zustand in den Bereich zwischen dem Antriebsblatt und dem Fahrradrahmen ragt.

Bei einer ersten nicht beanspruchten Ausführungsform weist die Abstandshülse einen Kragen auf. Der Kragen hinter- bzw. umgreift einen Kopf des Hauptlagerbolzens. Die Abstandshülse ist hierbei vorzugsweise derart ausgebildet, dass der Hauptlagerbolzen durch eine Öffnung der Abstandshülse gesteckt wird bis eine Unterseite des Kopfes des Hauptlagerbolzens an dem Kragen anliegt. Eine derartige Ausführungsform hat den Vorteil, dass herkömmliche Hauptlagerbolzen verwendet werden können. Insofern ist auch bei dieser Ausführungsform auf einfache Weise ein Nachrüsten möglich. Gegebenenfalls muss die Form des Hauptlagerbolzens, insbesondere des Kopfes des Hauptlagerbolzens geringfügig angepasst werden. In diesem Fall müsste sodann beim Nachrüsten der Hauptlagerbolzen mit ausgewechselt werden. Vorzugsweise ist der Kragen derart ausgebildet, dass er den Kopf des Hauptlagerelements hintergreift. In montiertem Zustand kann der Kragen derart ausgebildet sein, dass er die Funktion des Kopfes des Hauptlagerbolzens übernimmt. Insbesondere wird durch den Kragen ein Lagerinnenring des Hauptlagers fixiert.

Die Abstandshülse ist gegenüber dem Hauptlagerbolzen drehbar bzw. in der Lage veränderbar ausgebildet. Dies hat den Vorteil, dass die Lage der Abstandshülse unabhängig von der Lage des Hauptlagerbolzens eingestellt werden kann. Die Lage des Hauptlagerbolzens kann üblicherweise zur Lagedefinition der Abstandshülse nicht verändert werden, da durch den Hauptlagerbolzen stets eine ausreichende Kraft auf den Innenring des Lagers zu dessen Fixierung ausgeübt werden muss. Ein Verdrehen oder Verändern der Lage der Abstandshülse zu den Hauptlagerbolzen ist insbesondere dann vorteilhaft, wenn das Hauptlager nicht in der entsprechenden Lage zum Antriebsblatt vorgesehen ist, sondern einen Abstand zu diesem aufweist. Bei Ausführungsformen, bei denen die Lage des Hauptlagers exakt zu derjenigen des Antriebsblattes passt, ist es auch möglich, die Abstandshülse einstückig mit dem Hauptlagerbolzen auszubilden.

Bei der erfindungsgemässen Ausführungsform ist die Abstandshülse über ein Befestigungsmittel wie eine Schraube, eine Rastverbindung oder dergleichen an dem Hauptlagerbolzen befestigt. Insbesondere ist es hierdurch möglich, den Hauptlagerbolzen unabhängig vom Vorsehen der Abstandshülse zu montieren. In bevorzugter Ausführungsform ist es insbesondere möglich zunächst den Hauptlagerbolzen zu montieren und mit dem entsprechend vorgegebenen Drehmoment das Lager zu fixieren. In einem nächsten Schritt kann sodann über das Befestigungsmittel die Abstandshülse mit dem Hauptlagerbolzen verbunden werden.

Besonders bevorzugt ist es, dass der Hauptlagerbolzen eine zentrale Bohrung bzw. Öffnung aufweist, die insbesondere mit einem Gewinde versehen sein kann. In dieser zentralen Bohrung kann sodann das Befestigungsmittel angeordnet, insbesondere eingeschraubt werden. Hierbei ist es bevorzugt, dass die zentrale Bohrung innerhalb eines Innensechskantes des Hauptlagerbolzens angeordnet ist. Übliche Hauptlagerbolzen weisen einen Innensechskant auf, so dass der Hauptlagerbolzen in den Rahmen zur Fixierung des Innenrings des Lagers eingeschraubt werden kann. Erfindungsgemäß Bevorzugt ist es insofern, dass die Zentrale Bohrung zur Aufnahme des Befestigungsmittels für die Abstandshülse innerhalb dieses Innensechskantes, das heißt im Inneren eines Bolzenschaftes des Hauptlagerbolzens angeordnet ist. Das Befestigungsmittel wie die Schraube würde somit durch den Sechskant hindurch in die zentrale Bohrung eingeführt bzw. eingeschraubt. Hierdurch ist auf sehr einfache Art und Weise eine sehr zuverlässige Fixierung der Abstandshülse möglich. Auch kann die Lage der Abstandshülse wiederum veränder werden, um eine entsprechend erforderliche Anordnung der Abstandshülse, die gegebenenfalls einen Ansatz aufweist, einstellen zu können.

Vorzugsweise weist die Abstandshülse eine Anlagefläche auf, die an dem Kopf des Hauptlagerbolzens an einer korrespondierenden Auflagefläche anliegt. Die Anlagefläche dient insbesondere zur Zentrierung der Abstandshülse zu einer Mittel- bzw. Längsachse des Hauptlagerbolzens. Hierzu ist es bevorzugt, dass die Anlagefläche konisch ausgebildet ist. Entsprechend ist die Aufnahmefläche komplementär ausgebildet. Durch die konische Ausbildung ist einerseits eine Zentrierung realisiert, andererseits ist es auf einfache Weise möglich, die Abstandshülse zur Lagedefinition zu drehen.

Bei dem erfindungsgemäßen Führungselement weist die Abstandshülse einen Fortsatz auf. Der Fortsatz ist derart ausgebildet, dass er in montiertem Zustand radial zum Antriebsblatt, insbesondere oberhalb des Antriebsblatts angeordnet ist, so dass das Antriebsmittel in montiertem Zustand zwischen dem Antriebsblatt und dem Fortsatz angeordnet ist. Hierdurch ist vermieden, dass das Antriebsmittel nach oben vom Antriebsblatt abgehoben wird. Insbesondere bei einer Abstandshülse mit einem derartigen Fortsatz ist es besonders bevorzugt, dass die Abstandshülse drehbar ist. Durch Drehen der Abstandshülse kann die Lage des Fortsatzes definiert werden. Hierdurch ist insbesondere eine Anpassung an unterschiedliche Größen der Antriebsblätter möglich.

Der Fortsatz ist vorzugsweise in Längsrichtung des Hauptlagerbolzens ausgerichtet. Sodann verläuft der Fortsatz im Wesentlichen axial zu der Abstandshülse sowie dem Hauptlagerbolzen. Allerdings weist der Fortsatz vorzugsweise einen Abstand zu Mittelachse der Abstandshülse auf, so dass durch Drehen der Abstandshülse eine Lageveränderung und Justage möglich ist. In Umfangsrichtung der Abstandshülse weist der Fortsatz einen Winkel von weniger als 90° insbesondere weniger als 45° auf. Die Breite des Fortsatzes in Umfangsrichtung der Abstandshülse beträgt vorzugsweise 5 bis 15 mm.

Insbesondere ist der Fortsatz auf einer dem Hauptlagerbolzen abgewandten Seite angeordnet. Insbesondere ist der Fortsatz bei einer Abstandshülse mit Anlagefläche gegenüber der Anlagefläche angeordnet.

Das erfindungsgemäße Führungselement für Fahrradantriebsmittel weist insbesondere den Vorteil auf, dass dieses auf einfache Weise montiert werden kann. Je nach Ausführungsform ist auch eine Nachrüstung auf einfache Weise möglich. Insbesondere können durch das erfindungsgemäße Führungselement die Kosten und auch das Gewicht reduziert werden, da keine aufwendigen zusätzlichen Befestigungselemente zur Befestigung einer Kettenführung am Rahmen erforderlich sind. Des Weiteren ist das erfindungsgemäße Führungselement in das Erscheinungsbild des Fahrrads sehr gut integriert.

Nachfolgend wird die Erfindung anhand bevorzugter Ausführungsformen unter Bezugnahme auf die anliegenden Zeichnungen näher erläutert.

Es zeigen:
- Fig. 1: eine schematische Schnittansicht einer ersten nicht beanspruchten Ausführungsform und
- Fig. 2: eine schematische Schnittansicht einer zweiten erfindungsgemässen Ausführungsform.

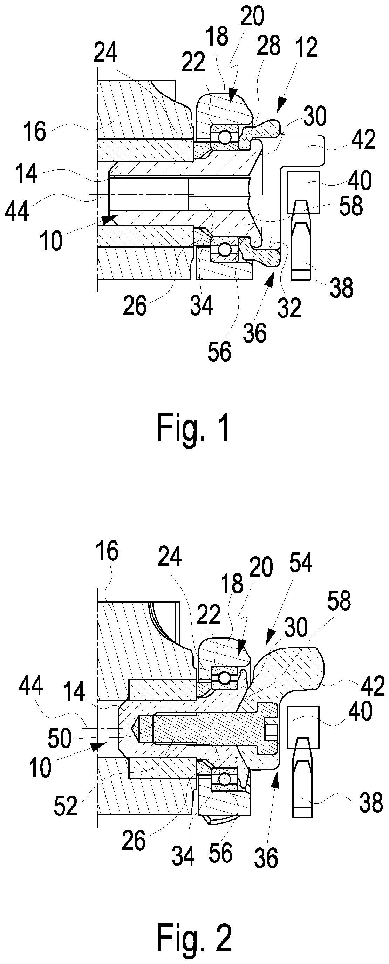

Bei der in Fig. 1 dargestellten ersten nicht beanspruchten Ausführungsform des Führungselements weist dieses einen Hauptlagerbolzen 10 sowie eine Abstandshülse 12 auf. Der als gesondertes Bauteil ausgebildete Hauptlagerbolzen 10 weist einen Schaft 14 mit einem Gewinde auf. Der Schaft 14 ist in eine mit einem Innengewinde versehene Bohrung eines Fahrradrahmenelements 16 einschraubbar. Ein Bauteil einer Hinterradschwinge wie eine Kettenstrebe 18 ist über ein Lager 20 schwenkbar mit dem Rahmenelement 16 verbunden. Hierbei ist ein Außenring 22 des Lagers 20 in der Kettenstrebe fixiert und ein Innenring 24 des Lagers 20 ist über den Hauptlagerbolzen 10 fixiert. Die Fixierung des Innenrings 24 am Fahrradrahmenelement 16 erfolgt durch Vorsehen eines Rings 26 zwischen dem Fahrradrahmenelement 16 und dem Innenring 24 des Lagers 20. Auf der Außenseite erfolgt die Fixierung über das erfindungsgemäße Führungselement.

Hierzu weist die Abstandshülse 12 einen Kragen 28 auf. Der Kragen 28 hintergreift einen Kopf 30 des Hauptlagerbolzens 10. Hierzu weist die Abstandshülse 12 eine Öffnung 32 auf, durch die der Hauptlagerbolzen 10 in Fig. 1 von rechts eingeführt werden kann bis der Kopf 30 an dem Kragen 28 anliegt. Der Kragen 28 ist in montiertem Zustand zwischen dem Kopf 30 und den Innenring 24 des Lagers 20 angeordnet.

Zum Fixieren des Hauptlagerbolzens 10 weist dieser einen Innensechskant 34 auf. Durch Einschrauben des Hauptlagerbolzens 10 in das Fahrradrahmenelement 16 wird der Innenring 24 des Lagers 20 fixiert.

Die Abstandshülse 12 ist in montiertem Zustand (Fig. 1) in einer Ausnehmung 36 zwischen einem Antriebsblatt 38 und einem Fahrradrahmenelement angeordnet, wobei es sich im dargestellten Ausführungsbeispiel bei dem Fahrradrahmenelement um die Kettenstrebe 18 handelt. Da die Abstandshülse 12 in diesen Zwischenraum 36 ragt ist vermieden, dass ein Antriebsmittel 40 wie eine Kette oder ein Riemen in diesen Zwischenraum gelangen kann. Hierdurch ist ein Verklemmen des Antriebsmittels 40 zwischen dem Antriebsblatt 38 und einem Fahrradrahmenelement, beispielsweise dem Tretlager vermieden.

Des Weiteren weist die Abstandshülse 12 einen Fortsatz 42 auf. Dieser verläuft in axiale Richtung, das heißt parallel zu einer Längsachse 44 des Hauptlagerbolzens 10. Der Fortsatz 42 ist in montiertem Zustand (Fig. 1) radial zu dem Antriebsblatt 38 angeordnet, so dass das Antriebsmittel 40 zwischen dem Antriebsblatt 48 und dem Fortsatz 42 angeordnet ist.

Je nach Lage des Hauptlagerbolzens 10 in Abhängigkeit der Ausgestaltung des Fahrradrahmens sowie je nach Größe des Antriebsblattes ist eine Justage des Fortsatzes 42 durch Drehen der Abstandshülse 12 möglich. Zum Drehen der Abstandshülse 12 muss der Hauptlagerbolzen 10 geringfügig gelöst werden. Nach der Justage muss der Hauptlagerbolzen sodann wieder insbesondere mit dem vorgegebenen Drehmoment angezogen werden, so dass ein sicheres Fixieren des Lagers 20 gewährleistet ist.

Die Abstandshülse 12 ist mit Ausnahme des Fortsatzes 42 rotationsymmetrisch zu der Achse 44.

Bei der in Fig. 2 dargestellten erfindungsgemässen Ausführungsform der Erfindung sind ähnliche und identische Bauteile mit denselben Bezugszeichen gekennzeichnet.

Der Hauptlagerbolzen 10 ist in dem in Fig. 2 dargestellten Ausführungsbeispiel geringfügig anders ausgebildet. Der Kopf 30 des Hauptlagerbolzens 10 ist nicht von einem Kragen umgriffen, sondern drückt wie bei herkömmlichen Hauptlagerbolzen üblich auf den Innenring 24 des Lagers 20. Zusätzlich zu dem Innensechskant 34 weist der Hauptlagerbolzen 10 in dem Schaft 14 ein Innengewinde 50 auf. Das Innengewinde 50 dient zur Aufnahme eines als Schraube 52 ausgebildeten Befestigungsmittels, das durch die den Innensechskant 34 aufweisende Öffnung des Hauptlagerbolzens 10 eingeführt wird.

Das Befestigungsmittel 52 dient zur Befestigung einer Abstandshülse 54. Die Abstandshülse 54 ist in dem in Fig. 2 dargestellten Ausführungsbeispiel im Wesentlichen an der Außenseite des Kopfes 30 des Hauptlagerbolzens 10 angeordnet. Die Abstandshülse ist zunächst entsprechend der in Fig. 1 dargestellten Abstandshülse 12 derart in einem Zwischenraum 36 angeordnet, dass ein Herunterrutschen des Antriebsmittels 40 nach innen vermieden ist. Ferner weist die Abstandshülse 54 auch einen Fortsatz 42 auf, der entsprechend dem Fortsatz 42 ausgebildet und angeordnet ist.

Zur Fixierung der Abstandshülse 54 weist diese eine konisch ausgebildete Anlagefläche 56 auf, die an einer komplementär ausgebildeten Aufnahmefläche 58 des Kopfes 30 des Hauptlagerbolzens anliegt.

Bei der Montage der in Fig. 2 dargestellten Ausführungsform ist es möglich, den Hauptlagerbolzen 10 zunächst zu montieren und das Lager 20 zu fixieren. Die Montage der Abstandshülse 54 erfolgt unabhängig von der Montage des Hauptlagerbolzens mittels der Schraube 52. Die Abstandshülse 54 kann um die Achse 44 gedreht werden, so dass wiederum eine Justage bzw. Lagedefinition des Fortsatzes 42 auf einfache Weise möglich ist. Diese kann auf einfache Weise jederzeit nachjustiert werden, da hierzu nur die Schraube 52 gelöst werden muss. Ein Lösen des Hauptlagerbolzens 10 und ein anschließendes erneutes Fixieren des Hauptlagerbolzens 10 mit dem erforderlichen Drehmoment ist nicht notwendig.

## Patentansprüche

1. Führungselement für Fahrrad-Antriebsmittel, mit
einem Hauptlagerbolzen (10) zur Fixierung eines Schwingenlagers (20) einer Hinterradschwinge (18) und
einer Abstandshülse ( 54), die an dem Hauptlagerbolzen (10) zur Verringerung des verbleibenden Abstandes in einem Zwischenraum (36) zwischen einem Antriebsblatt (38) und einem Fahrradrahmenelement angeordnet ist, um ein Herunterrutschen oder Abwerfen des Antriebsmittels nach innen zu vermeiden,
wobei
die Abstandshülse (54) über ein Befestigungsmittel (52) an dem Hauptlagerbolzen (10) drehbar befestigt ist und
dass die Abstandshülse ( 54) mit einem Fortsatz (42) verbunden ist,
wobei der Fortsatz (42) in montiertem Zustand radial zum Antriebsblatt (38) angeordnet ist, sodass das Antriebsmittel zwischen dem Antriebsblatt (38) und dem Fortsatz (42) angeordnet ist, **dadurch gekennzeichnet, dass** durch Drehen der Abstandshülse (54) die Lage des Fortsatzes (42) definiert wird.

2. Führungselement nach Anspruch 1, **dadurch gekennzeichnet, dass** der Fortsatz (42) auf eine in montiertem Zustand von dem Hauptlagerbolzen (10) abgewandten Seite angeordnet ist.

3. Führungselement nach Anspruch 1, **dadurch gekennzeichnet, dass** das Befestigungsmittel (52) über eine zentrale, insbesondere ein Gewinde (50) aufweisende Bohrung des Hauptlagerbolzens (10) mit diesem verbunden ist.

4. Führungselement nach Anspruch 2. 3, **dadurch gekennzeichnet, dass** die zentrale Bohrung in dem Hauptlagerbolzen (10) mit diesem verbunden ist.

5. Führungselement nach Anspruch 4, **dadurch gekennzeichnet, dass** die zentrale Bohrung in dem Hauptlagerbolzen (10) auf der Innenseite eines Innensechskants (34) angeordnet ist.

6. Führungselement nach einem der Ansprüche 1 bis 5, **dadurch gekennzeichnet, dass** die Abstandshülse ( 54) eine insbesondere zur Zentrierung dienende Anlagefläche (56) aufweist, die im montierten Zustand am Hauptlagerbolzen (10) insbesondere einer am Kopf (30) des Hauptlagerbolzens (10) vorgesehenen Anlagefläche (58) anliegt.

7. Führungselement nach Anspruch 6, **dadurch gekennzeichnet, dass** die Anlagefläche (56) konisch ausgebildet ist.

## Claims

1. A guide element for bicycle drive means, comprising
a main bearing pin (10) for fixing a swing arm bearing (20) of a rear wheel swing structure (18), and
a spacer sleeve (54) which is arranged on the main bearing pin (10) for reducing the remaining distance in a gap (36) between a drive ring (38) and a bicycle frame element so as to prevent the drive means from slipping off or being thrown off inwards,
wherein
the spacer sleeve (54) is fastened to the main bearing pin (10) via a fastening means (52), and
the spacer sleeve (12, 54) is connected to an extension (42),
wherein, in the mounted state, the extension (42) is arranged radially with respect to the drive ring (38) so that the drive means is arranged between the drive ring (38) and the extension (42),
**characterized in that**
the position of the extension (42) is defined by rotating the spacer sleeve (54).

2. The guide element according to claim 1, **characterized in that** the extension (42) is arranged on a side which in the mounted state is facing away from the main bearing pin (10).

3. The guide element according to claim 1, **characterized in that** the fastening means (52) is connected to the main bearing pin (10) via a central bore, particularly comprising a thread (50), of the main bearing pin (10).

4. The guide element according to claim 3, **characterized in that** the central bore is connected to the main bearing pin (10) within the main bearing pin (10).

5. The guide element according to claim 4, **characterized in that** the central bore is arranged in the main bearing pin (10) on the inner side of an internal hexagon (34).

6. The guide element according to any one of claims 1 to 5, **characterized in that** the spacer sleeve (54) comprises a contact surface (56) serving particularly for centering, said contact surface (56) in the mounted state abutting on the main bearing pin (10), particularly on a contact surface (58) provided on the head (30) of the main bearing pin (10).

7. The guide element according to claim 6, **characterized in that** the contact surface (56) is conical.

## Revendications

1. Elément de guidage pour moyen d'entraînement de bicyclette comprenant
un axe principal de palier (10) pour la fixation d'un pivot de bras oscillant (20),
un bras oscillant de roue arrière (18) et
une douille entretoise (54) qui est disposée sur l'axe principal de palier (10) pour réduire la distance restante dans un intervalle (36) entre un pignon d'entraînement (38) et un élément de châssis de bicyclette pour empêcher un glissement ou une chute du moyen d'entraînement vers l'intérieur,
la douille entretoise (54) étant fixée en rotation sur l'axe principal de palier (10) moyennant un moyen de fixation (52) et
la douille entretoise (54) étant attachée à un prolongement (42),
le prolongement (42) étant disposé, en l'état monté, radialement par rapport au pignon d'entraînement (38), si bien que le moyen d'entraînement soit disposé entre le pignon d'entraînement (38) et le prolongement (42),
**caractérisé en ce que** par une rotation de la douille entretoise (54), la position du prolongement (42) est définie.

2. Elément de guidage selon la revendication 1, **caractérisé en ce que** le prolongement (42) est disposé sur un côté opposé, en l'état monté, à l'axe principal de palier (10).

3. Elément de guidage selon la revendication 1, **caractérisé en ce que** le moyen de fixation (52) est attaché à l'axe principal de palier (10) au moyen d'un perçage central comprenant notamment un taraudage (50).

4. Elément de guidage selon la revendication 3, **caractérisé en ce que** le perçage central est relié à l'axe principal de palier (10) à l'intérieur de celui-ci.

5. Elément de guidage selon la revendication 4, **caractérisé en ce que** le perçage central est disposé dans l'axe principal de palier (10) sur le côté intérieur d'un six-pans intérieur.

6. Elément de guidage selon l'une des revendications 1 à 5, **caractérisé en ce que** la douille entretoise (54) comprend une surface d'appui (56) servant notamment au centrage qui, en l'état monté, est en appui sur l'axe principal de palier (10), notamment sur une surface d'appui (58) prévue à la tête (30) de l'axe principal de palier (10).

7. Elément de guidage selon la revendication 6, **caractérisé en ce que** la surface d'appui (56) est de forme conique.
